# EUROPEAN PATENT APPLICATION

(11) **EP 2 757 433 A2**
(43) Date of publication of application: **23.07.2014**
(21) Application number: 14151796.1
(22) Date of filing: 20.01.2014
(51) Int. Cl.: G05D 23/19, F24F 11/00

(54) **A HVAC system configured based on atmospheric data, an interface for receiving the atmospheric data and a controller configured to setup the HVAC system based on the atmospheric data**

(30) Priority: 21.01.2013 US 201361754932 P; 27.09.2013 US 201314039890
(71) Applicant: Lennox Industries Inc., Richardson, TX 75080 (US)
(72) Inventor: Difulgentiz III, Robert Anthony, Richardson, TX 75080 (US); Brizendine, Tim, Richardson, TX 75080 (US); Golden, Kyle, Richardson, TX 75080 (US); Nark, Dave, Richardson, TX 75080 (US)
(74) Representative: Williams, David John

(57) **Abstract**

A HVAC system that employs atmospheric data, a controller for an HVAC system and a graphical user interface that receives atmospheric data are provided is disclosed. In one embodiment the HVAC system includes: (1) an interface that receives atmospheric data for an installed location of the HVAC system and (2) a controller that configures the HVAC system based on the atmospheric data.

## Description

### CROSS-REFERENCE TO RELATED APPLICATION

This application claims the benefit of U.S. Provisional Application Serial No. 61/754,932, filed by Charavda, et al., on January 21, 2013, entitled "USER INTERFACE SCREENS AND CONTROLLER FOR HVAC SYSTEM," commonly assigned with this application and incorporated herein by reference.

### TECHNICAL FIELD

This application is directed, in general, to heating, ventilating and air conditioning (HVAC) systems and, more specifically, to setting up and operating HVAC systems.

### BACKGROUND

HVAC systems are used to regulate environmental condition within an enclosed space. Typically, HVAC systems have a circulation fan that pulls air from the enclosed space through ducts and pushes the air back into the enclosed space through additional ducts after conditioning the air (e.g., heating, cooling, humidifying or dehumidifying the air). To direct operations of HVAC components including a circulation fan, each HVAC system includes at least one HVAC controller. The HVAC controller employs settings or set points to direct the operations of the HVAC components.

### SUMMARY

In one aspect a HVAC system is disclosed. In one embodiment the HVAC system includes: (1) an interface that receives atmospheric data for an installed location of the HVAC system and (2) a controller that configures the HVAC system based on the atmospheric data.

In another aspect, a controller for an HVAC system is disclosed. In one embodiment, the controller includes: (1) an interface configured to receive atmospheric data that corresponds to an installed location of the HVAC system and (2) a processor configured to set operating parameters for the HVAC system based on the atmospheric data.

In still yet another embodiment, a graphical user interface for an HVAC system is disclosed. In one embodiment, the graphical user interface includes: (1) an atmosphere information input area configured to accept atmospheric data that corresponds to an installed location of the HVAC system and (2) an operating parameter display area configured to indicate an operating parameter for a component of the HVAC system that corresponds to the atmospheric data.

### BRIEF DESCRIPTION

Reference is now made to the following descriptions taken in conjunction with the accompanying drawings, in which:
FIG. 1 is a high-level block diagram of an embodiment of a HVAC system constructed according to the principles of the disclosure;
FIG. 2 is a block diagram of an embodiment of a controller constructed according to the principles of the disclosure; and
FIG. 3 illustrates an example of an embodiment of a graphical user interface screen configured to receive atmospheric data to be used by a controller of a HVAC system according to the principles of the disclosure.

### DETAILED DESCRIPTION

HVAC components are generic components that are typically manufactured without knowledge of the actual installed location. For example, an indoor unit for an HVAC system is manufactured without knowing if the indoor unit will be installed in Florida or in Arizona. Thus, the same generic HVAC system can be installed in two completely different climates. As such, the settings or set points for HVAC systems are not tailored for particular geographical regions or the specific location where the HVAC system is installed.

To improve operation of an HVAC system, the disclosure provides an HVAC system that intelligently configures itself based on atmospheric data of an installed location of the HVAC system. The HVAC system can be, for example, a residential system or a commercial system, such as a roof top system. Accordingly, the HVAC system can increase the efficiency of the HVAC system and the comfort of users of the HVAC system. The atmospheric data can be specific or general for the installed location. For example, the atmospheric data can be directed to the specific location of the installed location or directed to the region of the installed location. Additionally, the atmospheric data can be associated with different periods of time. For example, the atmospheric data can be climatic data related to a geographic region that includes the installed location. Accordingly, the atmospheric data would relate to how the atmosphere behaves over a relatively long period of time, e.g., years or decades. Additionally, the atmospheric data can be weather data related to the geographic region of the installed location or, more specifically, the weather data of the installed location. Thus, the atmospheric data would relate to the condition of the atmosphere over a short period of time. As such, in some embodiments the atmospheric data can vary in degree of specificity based on time and also location.

In some embodiments, the weather data is real time data or current weather data. The HVAC system, therefore, can be configured to operate in view of the existing weather with respect to the installed location. For example, a source external of or to the HVAC system, i.e., an external source, such as a weather website, can indicate to a HVAC controller of an HVAC system that it is raining at the installed location of the HVAC system. In response, the HVAC controller can change a set point, such as a humidity set point, for the HVAC system to compensate for the existing wet condition.

In some embodiments, the weather data is a weather forecast. The HVAC system, therefore, can be configured to operate in view of the predicted weather with respect to the installed location. For example, the weather website can indicate to the HVAC controller that a cold front is moving in and the temperature will be dropping twenty degrees in a few hours. In response, the HVAC controller can change a set point, such as a furnace set point, for the HVAC system to compensate for upcoming weather change.

The improved HVAC system can employ the atmospheric data during the initial set up to optimize the set points (or operating parameters) of the HVAC system. The operating parameters of the HVAC system, for example, include but are not limited to airflow (also referred to herein as blower volume), humidity settings, refrigerant flow rate, outdoor fan speed, cooling capacity and heating capacity. Thus, the HVAC system can employ atmospheric data during system setup to configure the HVAC system for the installed location of the HVAC system. As used herein the installed location is the specific location that the system is installed or will be installed. In some embodiments, the HVAC system can be configured based on the atmospheric data at the installed location. In other embodiments, HVAC system can be configured according to the atmospheric data before the HVAC system is delivered to or during delivery to the installed location.

In some embodiments, the HVAC system receives the atmospheric data via user input. For example, the HVAC system receives atmospheric data via user input that indicates the type of humidity level for the region that includes the installed location. As noted above, the atmospheric data can be received during or for the initial set up (i.e., initial configuration) of the HVAC system. In other embodiments, the atmospheric data can be received via user input after the initial set up.

Turning now to the figures, embodiments of an HVAC system, a HVAC controller and an interface that employ or receive atmospheric data to configure the HVAC system are provided.

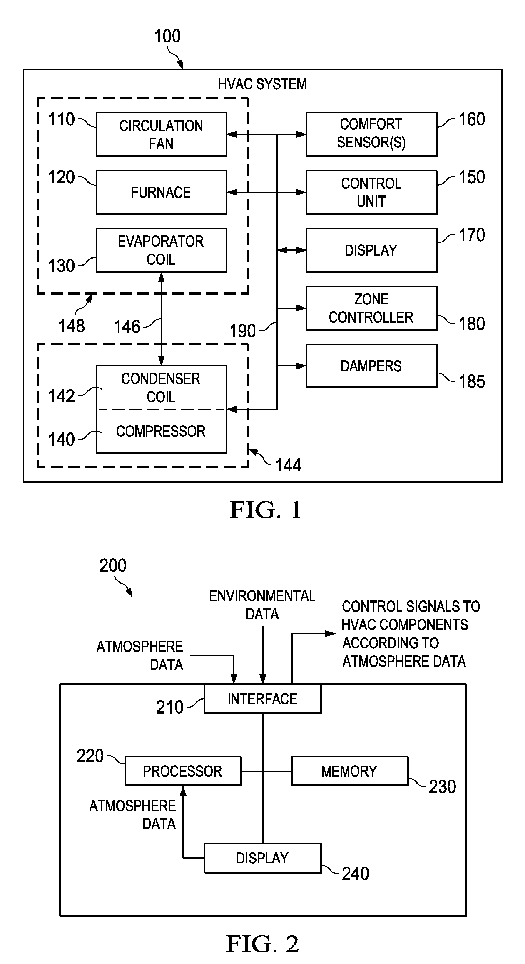

FIG. 1 is a high-level block diagram of an embodiment of a HVAC system 100, constructed according to the principles of the disclosure. The HVAC system 100 is a networked HVAC system configured to condition air within an enclosed space, such as a house, an office building, a warehouse, etc. The HVAC system 100 includes multiple components with a single one of some of the components in FIG. 1 being represented. One skilled in the art will understand that multiple of the same components can be included. One skilled in the art will also understand the HVAC system 100 can include other components that are not illustrated but typically included with an HVAC system.

The HVAC system 100 is a zoned system. As such, multiple comfort sensors 160 and dampers 185 are denoted. The HVAC system 100 also includes a circulation fan 110, a furnace 120, typically associated with the circulation fan 110, and a refrigerant evaporator coil 130, also typically associated with the circulation fan 110. The circulation fan 110, furnace 120, and refrigerant evaporator coil 130 are collectively referred to as the "indoor unit." This embodiment of the system 100 also includes a compressor 140 and an associated condenser coil 142, which are typically referred to as the "outdoor unit" 144. The compressor 140 and associated condenser coil 142 are typically connected to an associated evaporator coil 130 by a refrigerant line 146.

The circulation fan 110, sometimes referred to as a blower, can operate at different capacities, i.e., motor speeds, to circulate air through the HVAC system 100, whereby the circulated air is conditioned and supplied to the conditioned enclosed space. The circulation fan 110 moves the air at a certain capacity according to a blower volume. In the HVAC system 100, the blower volumes for the circulating fan 110 are stored in an indoor controller of a HVAC system, such as control unit 150, in a searchable format configured to relate the blower volumes to atmospheric data. The blower volume is the airflow capacity or rate (often expressed in terms of cubic feet per minute, or CFM) of the circulating fan 110. In addition to blower volumes, other operating parameters can be stored in the memory in a searchable format that relates the operating parameters to atmospheric data.

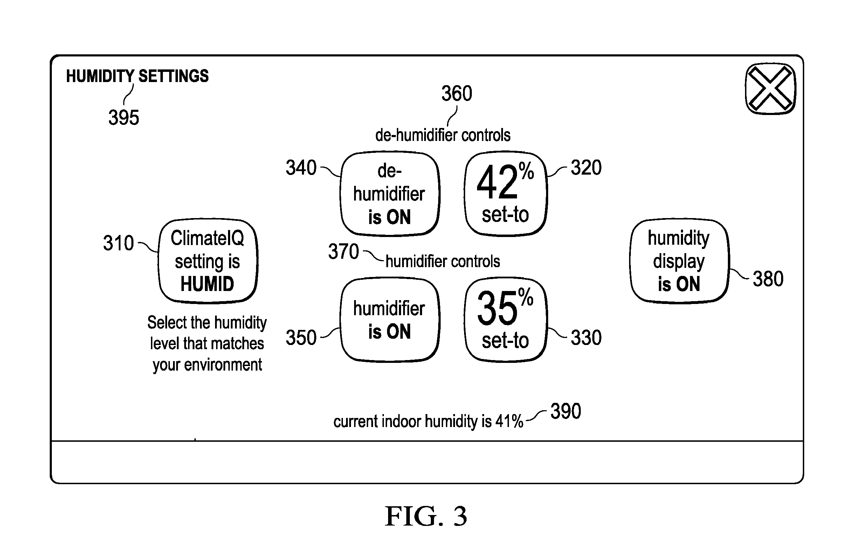

The control unit 150 is configured to control the circulation fan 110, the furnace 120 and/or the compressor 140 to regulate the environment of the enclosed space, at least approximately. The control unit 150 can also cooperate with the zone controller 180 and the dampers 185 to regulate the environment. To control or direct the operation of these components of the HVAC system 100, the control unit 150 employs set points or operating parameters. As disclosed herein, the various set points correspond to atmospheric data. In one embodiment, the relationship between set points and atmospheric data is predetermined during manufacturing. In some embodiments, the set points can be modified after manufacturing. Accordingly, a user can "fine tune" the default settings based on a specific installed location or personal preferences. For example, the default settings for the humidity type of "humid" can be 42% for dehumidification and 35% for humidification. Thus, when a user selects "humid" for the humidity type, the noted settings of 42% and 35% are automatically set. In some embodiments, a user can edit the values of these settings. Accordingly, in some embodiments the user can change the default setting of 42% or 35% for a "humid" region as desired. FIG. 3 provides an example of an interface for selecting a humidity type and the corresponding default settings as discussed.

The control unit 150 may be an integrated controller or a distributed controller that directs operation of the HVAC system 100. The control unit 150 may include an interface to receive thermostat calls, blower control signals, and blower volumes for various zones and operating modes of the HVAC system. The control unit 150 also includes a processor, such as a microprocessor, to direct the operation of the HVAC system 100. The processor can be configured to direct operation of the HVAC system 100 per atmospheric data entered, for example, during installation of the HVAC system 100. The graphical user interface 300 of FIG. 3 can be used to receive the atmospheric data that is used by the processor. The control unit 150 may include a memory section having a series of operating instructions stored therein that direct the operation of the control unit 150 (e.g., the processor) when initiated thereby. The series of operating instructions may represent algorithms that are used to control the HVAC system 100 based on the received atmospheric data. The memory or another memory of the control unit 150 is also configured to store the atmospheric data and settings associated therewith for the HVAC system 100.

The HVAC system 100 also includes comfort sensors 160 that may be associated with the control unit 150 and also optionally associated with a display 170. The comfort sensors 160 provide current information, environmental data, about environmental conditions within zones of the enclosed space, such as temperature, humidity and air quality to the control unit 150 and display 170.

In various embodiments, the display 170 provides additional functions such as operational, diagnostic and status message display and an attractive, visual interface that allows an installer, user or repairman to perform actions with respect to the HVAC system 100 more intuitively. In some embodiments, the display 170 is a thermostat for the HVAC system 100. In other embodiments, the display 170 is associated with a controller of the HVAC system 100, such as the control unit 150. In one embodiment the display 170 provides the interface of FIG. 3. Herein, the term "user" will be used to refer collectively to any of an installer, a tester, a user, an operator, a repairman, etc., unless clarity is served by greater specificity.

The zone controller 180 is configured to manage the movement of conditioned air to the designated zones of the enclosed space. Each of the designated zones include at least one demand unit, such as the furnace 120, and at least one user interface, such as a thermostat. The zone controlled HVAC system 100 allows a user to independently control the temperature in the designated zones. The zone controller 180 operates electronic dampers 185 to control air flow to the zones of the enclosed space. The zone controller 180 generates a blower control signal to request a blower volume for the circulation fan 110. The blower control signal can vary according to the entered atmospheric data.

In some embodiments, the zone controller 180 is configured to provide greater or less air flow to compensate for the received atmospheric data. The zone controller 180 can be a conventional controller for delivering conditioned air to designated zones of a conditioned space. Harmony III™ Zone Control System and iHarmony™ Zone Control System available from Lennox Industries, Inc. of Richardson, Texas, are examples of zoning systems that employ a zone controller to manage the distribution of conditioned air to designated zones.

A data bus 190, which in the illustrated embodiment is a serial bus, couples the various components of the HVAC system 100 together such that data may be communicated therebetween or thereamong. The data bus 190 may be advantageously employed to convey one or more alarm messages or one or more diagnostic messages. In some embodiments, the connections therebetween are through a wired-connection. A conventional cable and contacts may be used to couple the indoor unit controller 150 to the various components. In some embodiments, a wireless connection may also be employed to provide at least some of the connections.

In different embodiments, the control unit 150, the display 170 and the zone controller 180 can be a HVAC controller. As such, either one of the control unit 150, the display 170 or the zone controller 180 can be configured to receive atmospheric data as described herein. FIG. 2 provides additional information of an embodiment of a HVAC controller.

FIG. 2 illustrates a block diagram of an embodiment of a controller 200 of a HVAC system constructed according to the principles of the disclosure. The controller 200 is configured to receive atmospheric data for the HVAC system, set up or configure the HVAC system based thereon and direct operation of the HVAC system accordingly. The atmospheric data can be entered during installation of the HVAC system. In one embodiment, the graphical user interface 300 of FIG. 3 can be used to receive the atmospheric data.

The controller 200 includes an interface 210, a processor 220, a memory 230 and a user display 240. Additionally, the controller 200 may include additional components typically included within a controller for a HVAC system, such as a power supply or power port. In different embodiments, the controller 200 can be a control unit, a zone controller or a thermostat of a HVAC system.

In one embodiment, each of the components in the controller 200 is operatively coupled to each other via conventional means to communicate information. While all of the components can be contained in one enclosure, in some embodiments, some of these components may be located outside the enclosure while being operatively coupled to other components. Also in some embodiments, a HVAC system has multiple controllers based on the structure or the number of zones of the enclosed space in which the HVAC system is applied.

The interface 210 of the controller 200 serves as an interface between the controller 200 and the HVAC components. The interface 210 is configured to receive environmental data such as temperature, humidity, etc., from sensors, such as comfort sensors, located throughout the enclosed space and transmit control signals that represent instructions to perform services to the respective HVAC components. In one embodiment, the environmental data and control signals are communicated via a data bus such as the data bus 190 of FIG. 1.

The interface 210 is also configured to receive atmospheric data that corresponds to the HVAC system. The atmospheric data can be received during installation. In one embodiment, the interface 210 receives the atmospheric data via a user interface screen. In another embodiment, the atmospheric data is received from data sources external to the HVAC system via a communications network, such as wired, wireless or a combination thereof. The communications network can be a conventional network that operates according to standard communication protocols.

The interface 210 can receive atmospheric data for the geographic region of the installed location or for the installed location of the HVAC system from one or more external data sources that are independent of the HVAC system, including, but not limited to ACCUWEATHER®, INTELLICAST®, THE WEATHER CHANNEL®, the National Oceanic and Atmospheric Administration (NOAA) National Weather Service, and various local weather services proximate the installation location of the HVAC system. Accordingly, in one embodiment the controller 200 utilizes atmospheric data received for a geographic region proximate the installed location of the HVAC system.

The processor 220 of the controller 200 directs the operation of the controller 200 and instructs other HVAC components based on programming data. The programming data can be stored in the memory 230. The programming data includes set points, such as temperature set points, system modes, fan modes, humidity set points, blower volumes, etc., for the HVAC system 100. The various set points are related to atmospheric data via a searchable database. The relationship between the atmospheric data and the set points, at least the default settings, is established by the manufacturer of the HVAC system. The relationships can be based on historical data. The predetermined relationships allow automatic configuration of the HVAC system based on the atmospheric data. This allows optimization of the HVAC system for particular installed locations without having to specifically design HVAC systems for particular geographic regions. The processor 220 may be a conventional processor such as a microprocessor.

The memory 230 may be a conventional memory typically located within the controller, such as a microcontroller, that is constructed to store the programming data. The memory 230 may store operating instructions such as control signals to direct the operation of the processor 220 when initiated thereby. The operating instructions may correspond to algorithms that provide the functionality of the operating schemes disclosed herein.

The display 240 visually provides information to a user and allows interaction with the user. In one embodiment, the display 240 can provide a setup screen that allows the user to enter the programming data. In addition to the setup screen, the display 240 can provide other screens such as an atmospheric screen that allows for the input of atmospheric data. In one embodiment, the display 240 provides the graphical user interface 300 that provides a screen for selecting a humidity type.

FIG. 3 illustrates a view of an embodiment of a graphical user interface 300 constructed according to the principles of the disclosure. The graphical user interface 300 provides an example of an interface screen that allows a user to enter atmospheric data for a HVAC system. The atmospheric data addressed by the graphical user interface screen 300 relates to humidity. Other interface screens can be used to receive other atmospheric data information. For example, other interface screens can be configured to receive atmospheric data directed to different climate information pertaining to temperature, atmospheric pressure, wind, precipitation, etc. The graphical user interface screen 300 provides a single interface screen configured to allow a user to enter a humidity level that corresponds to the humidity level of the installed location of the HVAC system. The graphical user interface screen 300 can be used by an installer during installation of the HVAC system.

One skilled in the art will understand that other interface screens can be employed to receive other type of atmospheric data besides humidity. As such, one skilled in the art will understand that references to humidity in the below description and in FIG. 3 also apply to other types of atmospheric data.

The graphical user interface 300 includes an atmosphere information area 310, a first operating parameter display area 320, a second operating parameter display area 330, a first operation indication area 340, a second operation indication area 350, a first control description 360, a second control description 370, a status area 380, a report area 390 and a title 395.

The atmosphere information area 310 is configured to accept atmospheric data that corresponds to an installed location of the HVAC system. The atmosphere information area 310 can provide selections from which an atmospheric type can be selected. For example, the graphical user interface 300 relates to humidity data. Humidity types can be provided, such as Dry, Moderate and Humid, that can be selected to correspond to the installed location. In atmosphere information area 310, Humid has been selected.

The first operating parameter display area 320 provides the default setting for a humidity setting for dehumidification. The second operating parameter display area 330 provides the default setting for a humidity setting for humidification. The first operation indication area 340 displays the type of operation that corresponds to the setting in the first operating parameter display area 320. The second operation indication area 350 displays the type of operation that corresponds to the setting in the second operating parameter display area 330. Accordingly, when the dehumidifier is on, the default setting for a Humid region is 42%. When the humidifier is one, the default setting for a Humid region is 35%. The first control description 360 and the second control description 370 textually identify the related operating parameter display area and operation indication area.

The status area 380 indicates if the graphical user interface 300 is receiving atmospheric data or not. In FIG. 3, the graphical user interface 300 is "ON" and therefore is receiving inputs. If "OFF," the graphical user interface 300 is not receiving input data. The status area 380 can be used in some embodiments to save the entered atmospheric data and the corresponding settings by changing the status from "ON" to "OFF." The status area 380 can thus be used to store the entered data in a memory of an HVAC controller. The memory can be a conventional memory of the HVAC controller.

The report area 390 illustrates the current humidity level of the enclosed space. The title 395 describes the subject of the particular graphics user interface 300. This is helpful when viewing multiple screens during installation of the HVAC system.

A user can change the humidity types in the atmosphere information area 310 by touching the designated area to toggle through different humidity types. The corresponding humidity settings are then provided in the first and the second operating parameter display areas 320, 330. In some embodiments, the default settings can then be changed.

Changing or entering information in the atmosphere information area 310, the first and the second operating parameter display areas 320, 330 and the status area 380 can be performed by touching or pressing the particular areas of the graphical user interface 300. In other embodiments a user input device, such as a keypad, touchpad, stylus pen, etc., can be used to enter information. The method of entering information can be determined based on the type of display in which the graphical user interface 300 is employed.

An example of how the graphical user interface 300 can be used to optimize the operation of an HVAC system is now provided. In one embodiment, a user can turn on the "HUMIDITY SETTINGS" page by activating the status area 380. The user can then select "HUMID" in the atmosphere information area 310. In response, a processor associated with the graphical user interface 300 populates the first and the second operating parameter display areas 320, 330, with the default humidity settings for a humid climate. The humidity settings, 42% and 35% are retrieved from a memory associated with the processor. The memory, or a database or table thereof, is searched based on the selected humid climate to obtain the default humidity settings. The status area 380 is then activated again to turn off the "HUMIDITY SETTINGS" page and save the default humidity settings for operating the HVAC system. In some embodiments, a user can modify the default settings before saving. The modifications can be based on personal preferences. In some embodiments, the modifications can be based on operating guidelines for a particular commercial client.

The above-described apparatuses, methods or interface screens may be embodied in, provide by or performed by various conventional digital data processors, microprocessors or computing devices, wherein these devices are programmed or store executable programs of sequences of software instructions to perform one or more of the steps of a method or provide an interface screen. The software instructions of such programs may be encoded in machine-executable form on conventional digital data storage media that is non-transitory, e.g., magnetic or optical disks, random-access memory (RAM), magnetic hard disks, flash memories, and/or read-only memory (ROM), to enable various types of digital data processors or computing devices to perform one, multiple or all of the steps of one or more of the above-described methods or to provide one of the described interface screens. Additionally, an apparatus, such as a HVAC controller, may be designed to include the necessary circuitry or programming to perform each step of a method as disclosed herein or provide a single user interface as disclosed.

Portions of disclosed embodiments may relate to computer storage products with a non-transitory computer-readable medium that have program code thereon for performing various computer-implemented operations that embody a part of an apparatus, system, carry out the steps of a method set forth herein or provide a single user interface screen as disclosed. Non-transitory used herein refers to all computer-readable media except for transitory, propagating signals. Examples of non-transitory computer-readable media include, but are not limited to: magnetic media such as hard disks, floppy disks, and magnetic tape; optical media such as CD-ROM disks; magneto-optical media such as floptical disks; and hardware devices that are specially configured to store and execute program code, such as ROM and RAM devices. Examples of program code include both machine code, such as produced by a compiler, and files containing higher level code that may be executed by the computer using an interpreter.

Those skilled in the art to which this application relates will appreciate that other and further additions, deletions, substitutions and modifications may be made to the described embodiments.

## Claims

1. A HVAC system, comprising:
an interface that receives atmospheric data for an installed location of said HVAC system; and
a controller that configures said HVAC system based on said atmospheric data.

2. The HVAC system as recited in Claim 1, wherein said controller is constructed to configure said HVAC system employing predetermined settings that correspond to said atmospheric data.

3. The HVAC system as recited in Claim 2 wherein said predetermined settings are operating parameters for components of said HVAC system.

4. The HVAC system as recited in Claim 1 wherein said interface is a graphical user interface configured to provide a list of selections for said atmospheric data.

5. The HVAC system as recited in Claim 1 wherein said interface is a communications user interface configured to receive said atmospheric data via a communications network from an external source.

6. The HVAC system as recited in Claim 1 wherein said atmospheric data is climatic data.

7. The HVAC system as recited in Claim 1 wherein said atmospheric data is weather data.

8. A controller for an HVAC system, comprising:
an interface configured to receive atmospheric data that corresponds to an installed location of said HVAC system; and
a processor configured to set operating parameters for said HVAC system based on said atmospheric data.

9. A graphical user interface for an HVAC system, comprising:
an atmosphere information input area configured to accept atmospheric data that corresponds to an installed location of said HVAC system; and
an operating parameter display area configured to indicate an operating parameter for a component of said HVAC system that corresponds to said atmospheric data.

10. A graphical user interface as recited in Claim 9 wherein said atmospheric data is a humidity level that corresponds to a geographical region which includes said installed location and said operating parameter is a humidity setting.
